# EUROPEAN PATENT SPECIFICATION

(11) **EP 1 193 787 B1**
(45) Date of publication and mention of the grant of the patent: **05.12.2012**
(21) Application number: 01123181.8
(22) Date of filing: 27.09.2001
(51) Int. Cl.: H01M 4/58, H01M 10/0525

(54) **Method for the preparation of cathode active material and method for the preparation of a non-aqueous electrolyte cell**
Verfahren zur Herstellung von aktivem Kathodenmaterial und Verfahren zur Herstellung einer Zelle mit nichtwässrigem Elektrolyten
Méthode pour la fabrication de matière active cathodique et méthode de fabrication d'une cellule à électrolyte non-aqueux

(30) Priority: 29.09.2000 JP 2000301399
(43) Date of publication of application: 03.04.2002
(73) Proprietor: Sony Corporation, Tokyo (JP)
(72) Inventor: Hosoya, Mamoru, Minato-ku Tokyo (JP); Takahashi, Kimio, Minato-ku Tokyo (JP); Fukushima, Yuzuru, Minato-ku Tokyo (JP)
(74) Representative: Müller - Hoffmann & Partner

(56) References cited:
- EP-A2- 1 184 920
- WO-A-01/53198
- PATENT ABSTRACTS OF JAPAN vol. 1997, no. 10, 31 October 1997 (1997-10-31) & JP 09 171827 A (SONY CORP), 30 June 1997 (1997-06-30)
- PATENT ABSTRACTS OF JAPAN vol. 1997, no. 09, 30 September 1997 (1997-09-30) & JP 09 134725 A (NIPPON TELEGR &TELEPH CORP <NTT>), 20 May 1997 (1997-05-20)

## Description

### BACKGROUND OF THE INVENTION

### Field of the Invention

This invention relates to a method for the preparation of a cathode active material, capable of reversibly doping/undoping lithium, and to a method for the preparation of a non-aqueous electrolyte cell employing ths cathode active material.

### Description of Related Art

Nowadays, in keeping up with the recent marked progress in the electronic equipment, researches into re-chargeable secondary cells, as power sources usable conveniently and economically for prolonged time, are underway. Representative of the secondary cells are lead accumulators, alkali accumulators and non-aqueous electrolyte secondary cells.

Of the above secondary cells, lithium ion secondary cells, as non-aqueous electrolyte secondary cells, have such merits as high output and high energy density. The lithium ion secondary cells are made up of a cathode and an anode, including active materials capable of reversibly doping/undoping lithium ions, and a non-aqueous electrolyte.

As the anode active material, metal lithium, lithium alloys, such as Li-Al alloys, electrically conductive high molecular materials, such as polyacetylene or polypyrrole, doped with lithium, inter-layer compounds, having lithium ions captured into crystal lattices, or carbon materials, are routinely used. As the electrolytic solutions, the solutions obtained on dissolving lithium salts in non-protonic organic solvents, are used.

As the cathode active materials, metal oxides or sulfides, or polymers, such as TiS₂, MoS₂, NbSe₂ or V₂O₅, are used. The discharging reaction of the non-aqueous electrolyte secondary cells, employing these materials, proceeds as lithium ions are eluated into the electrolytic solution in the anode, whilst lithium ions are intercalated into the space between the layers of the cathode active material. In charging, a reaction which is the reverse of the above-described reaction proceeds, such that lithium is intercalated in the cathode. That is, the process of charging/discharging occurs repeatedly by the repetition of the reaction in which lithium ions from the anode make an entrance into and exit from the cathode active material.

As the cathode active materials for the lithium ion secondary cells, LiCoO₂, LiNiO₂ and LiMn₂O₄, for example, having a high energy density and a high voltage, are currently used. However, these cathode active materials containing metallic elements having low Clarke number in the composition thereof, are expensive, while suffering from supply difficulties. Moreover, these cathode active materials are relatively high in toxicity and detrimental to environment. For this reason, novel cathode active materials, usable in place of these materials, are searched.

On the other hand, it is proposed to use LiFePO₄, having an olivinic structure, as a cathode active material for the lithium ion secondary cells. LiFePO₄ has a high volumetric density of 3.6 g/cm³ and is able to develop a high potential of 3.4 V, with the theoretical capacity being as high as 170 mAh/g. In addition, LiFePO₄ in an initial state has an electro-chemically undopable Li at a rate of one Li atom per each Fe atom, and hence is a promising material as a cathode active material for the lithium ion secondary cell. Moreover, since LiFePO₄ includes iron, as an inexpensive material rich in supply as natural resources, it is lower in cost than LiCoO₂, LiNiO₂ or LiMn₂O₄, mentioned above, while being more amenable to environment because of lower toxicity.

However, LiFePO₄ is low in electronic conduction rate, such that, if this material is used as a cathode active material, the internal resistance in the cell tends to be increased. The result is that the polarization potential on cell circuit closure is increased due to increased internal resistance of the cell to decrease the cell capacity. Moreover, since the true density of LiFePO₄ is lower than that of the conventional cathode material, the charging ratio of the active material cannot be increased sufficiently if LiFePO₄ is used as the cathode active material, such that the energy density of the cell cannot be increased sufficiently.

So, a proposal has been made to use a composite material of a carbon material and a compound of an olivinic structure having the general formula of LiₓFePO₄ where 0 < x 1, referred to below as LiFePO₄ carbon composite material, as a cathode active material.

Meanwhile, there is proposed, as a manufacturing method for the LiFePO4 carbon compound material having such olivinic structure, such a method consisting in mixing lithium phosphate (Li₃PO₄) and ferrous phosphate or its hydrate Fe₃PO₄)₂·nH₂O, where n denotes the number of hydrates, as starting materials for synthesis, adding carbon to the mixture and firing the resulting mass at a preset temperature.

In Fe₃(PO₄)₂ or its hydrates, among the starting material for synthesis for LiₓFePO4, there is contained a certain quantity of Fe³⁺ because of constraints in the synthesis process. However, if Fe³⁺ is left over in the starting material for synthesis, trivalent Fe compound is also generated on firing, thus obstructing the single-phase synthesis of the LiₓFePO₄ carbon composite material

If Fe₃(PO₄)₂ not containing Fe³⁺ or its hydrate Fe₃(PO₄)₂·nH₂O, where n is the number of hydrates, is used as one of the starting material for synthesis, single-phase synthesis of the LiₓFePO₄ carbon composite material becomes possible. However, if the starting material for synthesis not containing Fe³⁺, the cost of the starting material is raised in a manner inconvenient for mass production of the LiₓFePO₄ carbon composite material.

Although Fe³⁺ can be reduced to Fe²⁺ by mixing a reducing agent at the time of firing, there is a certain limitation to the capability of the reducing agent, such that, if Fe³⁺ is contained to a more or less extent, Fe³⁺ is left over without being totally reduced, such that single-phase LiₓFePO₄ carbon composite material cannot be synthesized. That is, the technique of preventing persistence of Fe³⁺ to realize reliable single-phase synthesis of the LiₓFePO₄ carbon composite material has not been established as yet.

WO 01/53198 A1, which is prior art according to Art. 54(3) and (4) EPC, discloses a method of making a lithium-mixed metal compound by reaction of starting materials which comprises mixing starting materials in particle form, said starting materials comprising a metal compound, a lithium compound having a melting point greater than 450°C, and carbon, where said carbon is present in an amount sufficient to reduce the oxidation state of one metal ion of said starting materials without full reduction to an elemental stage; and heating said starting materials in a non-oxidizing atmosphere at a temperature sufficient to form a reaction product comprising lithium and said reduced metal ion.

EP 1 184 920 A2, which is prior art according to Art. 54(3) and (4) EPC, discloses the synthesis of LiFePO₄ composite carbon material by mixing lithium phosphate Li₃PO₄ and iron phosphate (II) octahydrate (Fe(PO₄)₂·8H₂O), adding acetylene black powders, milling this mixture and firing it.

### SUMMARY OF THE INVENTION

It is therefore an object of the present invention to provide a method for the preparation of a cathode active material by reliable single-phase synthesis of the LiₓFePO₄ carbon composite material to realize superior cell characteristics. It is another object of the present invention to provide a non-aqueous electrolyte cell having superior cell characteristics, such as cell capacity or cyclic characteristics, by employing the so prepared LiₓFePO₄ carbon composite material as the cathode active material.

In one aspect, the present invention provides a method for the preparation of a cathode active material including a mixing step of mixing starting materials for synthesis of a compound having the formula LiₓFePO₄, where 0 < x ≤ 1, a milling step of simultaneously pulverizing and mixing a mixture resulting from the mixing step and a sintering step of firing the mixture resulting from the milling step, wherein a carbon material is added at any one of the above steps, Li₃PO₄ and Fe₃(PO₄)₂ or a hydrate thereof Fe₃(PO₄)₂·nH₂O, where n denotes the number of hydrates, are used as the starting materials for synthesis, and wherein the content of Fe³⁺ in the total iron in the Fe₃(PO₄)₂ or a hydrate thereof Fe₃(PO₄)₂·nH₂O, where n denotes the number of hydrates, is set to 2 to 61 wt% or less.

Since limitations are imposed on the content ratio of Fe³⁺ contained in the starting material for synthesis, single-phase synthesis of LiₓFePO₄ and the carbon material can be realized reliably without allowing Fe³⁺ to be left over during sintering, that is without generating impurities derived from Fe³⁺. It should be noted that milling means performing pulverization and mixing simultaneously.

In another aspect, the present invention provides a method for the preparation of a non-aqueous electrolyte cell including a mixing step of mixing starting materials for synthesis of a compound having the fonnula LiₓFePO₄, where 0 < x ≤ 1, a milling step of simultaneously pulverizing and mixing a mixture resulting from the mixing step and a sintering step of firing the mixture resulting from the milling step, wherein a carbon material is added at any one of the above steps, Li₃PO₄ and Fe₃(PO₄)₂ or a hydrate thereof Fe₃(PO₄)₂·nH₂O, where n denotes the number of hydrates, are used as the starting materials for synthesis, and wherein the content of Fe³⁺ in the total iron in the Fe₃(PO₄)₂ or a hydrate thereof Fe₃(PO₄)₂·nH₂O, where n denotes the number of hydrates, is set to 2 to 61 wt% or less.

Since limitations are imposed on the content ratio of Fe³⁺ contained in the starting material for synthesis, single-phase synthesis of LiₓFePO₄ and the carbon material can be realized reliably without allowing Fe³⁺ to be left over during sintering, that is without generating impurities derived from Fe³⁺. Thus, by using this composite material as the cathode active material, it is possible to realize a non-aqueous electrolyte cell having a high capacity and superior cyclic characteristics.

### BRIEF DESCRIPTION OF THE DRAWINGS

Fig. 1 is a longitudinal cross-sectional view showing an illustrative structure of a non-aqueous electrolyte cell embodying the present invention.
Fig.2 is a graph showing Raman spectrum peaks of the carbonaceous material.

### DESCRIPTION OF THE PREFERRED EMBODIMENTS

Referring to the drawings, preferred embodiments of the present invention will be explained in detail.

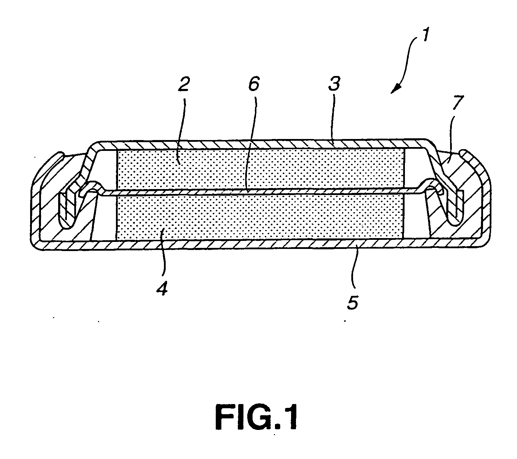

Referring to Fig. 1, a non-aqueous electrolyte cell 1, prepared in accordance with the present invention, includes an anode 2, an anode can 3, holding the anode 2, a cathode 4, a cathode can 5 holding the cathode 4, a separator 6 interposed between the cathode 4 and the anode 2, and an insulating gasket 7. In the anode can 3 and in the cathode can 5 is charged a non-aqueous electrolytic solution.

The anode 2 is formed by e.g., a foil of metal lithium as an anode active material. If a material capable of doping/undoping lithium is used as the anode active material, the anode 2 is a layer of an anode active material formed on an anode current collector, which may, for example, be a nickel foil.

As the anode active material, capable of doping/undoping lithium, metal lithium, lithium alloys, lithium-doped electrically conductive high molecular materials or layered compounds, such as carbon materials or metal oxides.

The binder contained in the anode active material may be any suitable known resin material, routinely used as the binder of the layer of the anode active material for this sort of the non-aqueous electrolyte cell.

The anode can 3 holds the anode 2, while operating as an external anode of the non-aqueous electrolyte cell 1.

The cathode 4 is a layer of the cathode active material formed on a cathode current collector, such as an aluminum foil. The cathode active material, contained in the cathode 4, is able to reversibly emit or occlude lithium electro-chemically.

As the cathode active material, a composite material of carbon and a compound of an olivinic structure having the formula LiₓFePO₄, where 0 < x ≤ 1.0, that is the LiFePO₄ carbon composite material, the detailed manufacturing method for which will be explained subsequently, is used.

In the following explanation, it is assumed that LiFePO₄ is used as LiₓFePO₄ and a composite material composed of this compound and carbon is used as the cathode active material.

The LiFePO₄ carbon composite material is such a material composed of LiFePO₄ particles on the surfaces of which are attached numerous particles of the carbon material having the particle size appreciably smaller than the particle size of the LiFePO₄ particles. Since the carbon material is electrically conductive, the LiFePO₄ carbon composite material, composed of the carbon material and LiFePO₄, is higher in electronic conductivity than e.g., LiFePO₄. That is, since the LiFePO₄ carbon composite material is improved in electronic conductivity due to the carbon particles attached to the LiFePO₄ particles, the capacity proper to LiFePO₄ can be sufficiently manifested. Thus, by using the LiFePO₄ carbon composite material as the cathode active material, the non-aqueous electrolyte secondary cell 1 having a high capacity can be achieved.

The carbon content per unit weight in the LiFePO₄ carbon composite material is desirably not less than 3 wt%. If the carbon content per unit weight of the LiFePO₄ carbon composite material is less than 3 wt%, the amount of carbon particles attached to LiFePO₄ may be insufficient so that sufficient favorable effect in improving the electronic conductivity may not be realized.

As the carbon material forming the LiFePO₄ carbon composite material, such a material is preferably used which has an intensity area ratio of diffracted beams appearing at the number of waves of 1570 to 1590 cm⁻¹ to the diffracted beams appearing at the number of waves of 1340 to 1360 cm⁻¹ in the Raman spectrum of graphite in the Raman spectroscopy, or the ratio A(D/G), equal to 0.3 or higher.

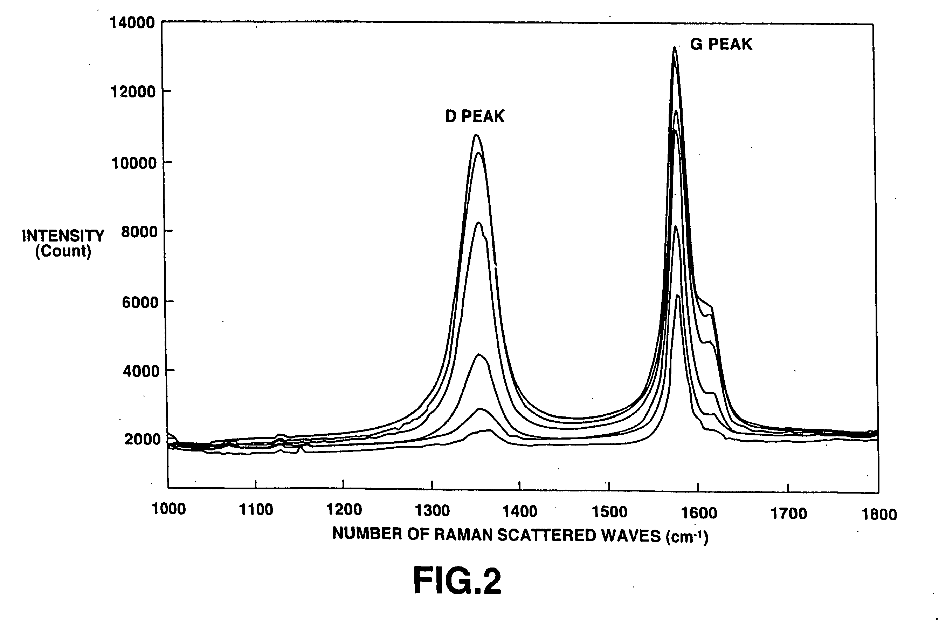

The intensity area ratio A(D/G) is defined as being a background-free Raman spectral intensity area ratio A(D/G) of a G-peak appearing at the number of waves of 1570 to 1590 cm⁻¹ and a D-peak appearing at the number of waves of 1340 to 1360 cm⁻¹ as measured by the Raman spectroscopic method as shown in Fig.2. The expression "background-free" denotes the state free from noisy portions.

Among the numerous peaks of the Raman spectrum of Gr, two peaks, namely a peak termed a G-peak appearing at the number of waves of 1570 to 1590 cm⁻¹ and a peak termed a D-peak appearing at the number of waves of 1340 to 1360 cm⁻¹, as discussed above, may be observed. Of these, the D-peak is not a peak inherent in the G-peak, but is a Raman inactive peak appearing when the structure is distorted and lowered in symmetry. So, the D-peak is a measure of a distorted structure of Gr. It is known that the intensity area ratio A (D/G) of the D- and G-peaks is proportionate to a reciprocal of the crystallite size La along the axis a of Gr.

As such carbon material, an amorphous carbon material, such as acetylene black, is preferably employed.

The carbon material having the intensity area ratio A (D/G) not less than 0.3 may be obtained by processing such as comminuting with a pulverizing device. A carbon material having an arbitrary ratio A (D/G) may be realized by controlling the pulverizing time duration.

For example, graphite, as a crystalline carbon material, may readily be destroyed in its structure by a powerful pulverizing device, such as a planetary ball mill, and thereby progressively amorphized, so that the intensity area ratio A (D/G) is concomitantly increased. That is, by controlling the driving time duration of a pulverizing device, such a carbon material having a desired A (D/G) value not less than 0:3 may readily be produced. Thus, subject to pulverization, a crystalline carbon material may also be preferably employed as a carbon material.

The powder density of the LiFePO₄ carbon composite material is preferably not less than 2.2 g/cm³. If the material for synthesis of the LiFePO₄ carbon composite material is milled to such an extent that the powder density is not less than 2.2 g/cm³, the resulting LiFePO₄ carbon composite material is comminuted sufficiently to realize a non-aqueous electrolyte secondary cell I having a higher charging ratio of the cathode active material and a high capacity. Moreover, since the LiFePO₄ carbon composite material is comminuted to satisfy the aforementioned powder density, its specific surface may be said to be increased. That is, a sufficient contact area may be maintained between LiFePO₄ and the carbon material to improve the electronic conductivity.

If the powder density of the LiFePO₄ carbon composite material is less than 2.2 g/cm³, the LiFePO₄ carbon composite material is not compressed sufficiently, so that there is a risk that the packing ratio of the active material cannot be improved at the cathode 4.

On the other hand, the Brunauer Emmet Teller (BET) specific surface area in the LiFePO₄ carbon composite material is preferably not less than 10.3 m²/g. If the BET specific surface area of the LiFePO₄ carbon composite material is not less than 10.3 m²/g, the surface area of LiFePO₄ per unit weight can be sufficiently increased to increase the contact area between LiFePO₄ and the carbon material to improve the electronic conductivity of the cathode active material.

The primary particle size of the LiFePO₄ carbon composite material is preferably not larger than 3.1 µm. By the primary particle size of the LiFePO₄ carbon composite material being not larger than 3.1 µm, the surface area of LiFePO₄ per unit area may be sufficiently increased to increase the contact area between LiFePO₄ and the carbon material to improve the electronic conductivity of the cathode active material.

The binder contained in the layer of the cathode active material may be formed of any suitable known resin material routinely used as the binder for the layer of the cathode active material for this sort of the non-aqueous electrolyte cell.

The cathode can 5 holds the cathode 4 while operating as an external cathode of the non-aqueous electrolyte cell 1.

The separator 6, used for separating the cathode 4 and the anode 2 from each other, may be formed of any suitable known resin material routinely used as a separator for this sort of the non-aqueous electrolyte cell. For example, a film of a high molecular material, such as polypropylene, is used. From the relation between the lithium ion conductivity and the energy density, the separator thickness which is as thin as possible is desirable. Specifically, the separator thickness desirably is 50 µm or less.

The insulating gasket 7 is built in and unified to the anode can 3. The role of this insulating gasket 7 is to prevent leakage of the non-aqueous electrolyte solution charged into the anode can 3 and into the cathode can 5.

As the non-aqueous electrolyte solution, such a solution obtained on dissolving an electrolyte in a non-protonic aqueous solvent is used.

As the non-aqueous solvent, propylene carbonate, ethylene carbonate, butylene carbonate, vinylene carbonate, γ-butyrolactone, sulforane, 1,2-dimethoxyethane, 1, 2-diethoxyethane, 2-methyl tetrahydrofuran, 3-methyl-1,3-dioxolane, methyl propionate, methyl lactate, dimethyl carbonate, diethyl carbonate and dipropyl carbonate, for example, may be used. In view of voltage stability, cyclic carbonates, such as propylene carbonate, ethylene carbonate, butylene carbonate or vinylene carbonate, and chained carbonates, such as dimethyl carbonate, diethyl carbonate and dipropyl carbonate, are preferably used. These non-aqueous solvents may be used alone or in combination.

As the electrolytes dissolved in the non-aqueous solvent, lithium salts, such as LiPF₆, LiClO₄, LiAsF₆, LiBF₄, LiCF₃SO₃ or LiN(CF₃SO₂)₂, may be used. Of these lithium salts, LiPF₆ and LiBF₄ are preferred.

Although the non-aqueous electrolyte cell, explained above, is the non-aqueous electrolyte secondary cell 1 employing a non-aqueous electrolyte solution, the present invention is not limited thereto, but may be applied to such a cell employing a solid electrolyte as the non-aqueous electrolyte. The solid electrolyte used may be an inorganic solid electrolyte or a high molecular solid electrolyte, such as gel electrolyte, provided that the material used exhibits lithium ion conductivity. The inorganic solid electrolyte may be enumerated by lithium nitride and lithium iodide. The high molecular solid electrolyte is comprised of an electrolyte salt and a high molecular compound dissolving it. The high molecular compound may be an etheric high molecular material, such as poly(ethylene oxide), cross-linked or not, a poly(methacrylate) ester based compound, or an acrylate-based high molecular material, either alone or in combination in the state of being copolymerized or mixed in the molecules. In this case, the matrix of the gel electrolyte may be a variety of high molecular materials capable of absorbing and gelating the non-aqueous electrolyte solution. As these high molecular materials, fluorine-based high molecular materials, such as, for example, poly(vinylidene fluoride) or poly(vinylidene fluoride- CO - hexafluoropropylene), etheric high molecular materials, such as polyethylene oxide, cross-linked or not, or poly(acrylonitrile), may be used. Of these, the fluorine-based high molecular materials are particularly desirable in view of redox stability.

The method for the preparation of the non-aqueous electrolyte cell 1, constructed as described above, is hereinafter explained.

First, a composite material of LiₓFePO₄ and the carbon material, as a cathode active material, is synthesized by a manufacturing method as now explained.

For synthesizing the cathode active material, LiₓFePO₄ as a starting material for synthesis is kneaded together, milled and sintered. At an optional time point in the course of the mixing, milling and sintering, a carbon material is added to the kneaded starting materials for synthesis. As the LiₓFePO₄ starting materials for synthesis, Li₃PO₄, Li₃(PO₄)₂ or a hydrate Fe₃(PO₄)₂·nH₂O thereof where n denotes the number of hydrates, are used.

In the following, such a case is explained in which lithium phosphate Li₃PO₄ and a hydrate Fe₃(PO₄)₂·8H₂O thereof, synthesized as explained below, are used as starting materials for synthesis, and in which, after adding a carbon material to these starting materials for synthesis, a number of process steps are executed to synthesize the LiFePO₄ carbon composite material.

First, the LiFePO₄ starting materials for synthesis and the carbon material are mixed together to form a mixture by way of a mixing step. The mixture from the mixing step is then milled by a milling process, and the milled mixture then is fired by way of a sintering process.

In the mixing process, lithium phosphate and iron phosphate I octahydrate are mixed together at a pre-set ratio and further added to with a carbon material to form a mixture.

This iron phosphate I octahydrate, used as a starting material for synthesis, is synthesized by adding disodium hydrogen phosphate duodecahydrate (2Na₂HPO₄·12H₂O) to an aqueous solution obtained on dissolving iron phosphate heptahydrate (FeSO₄·7H₂O) in water and by allowing the resulting mass to dwell for a pre-set time. The reaction of synthesis of iron phosphate I octahydrate may be represented by the following chemical formula (1):

3FeSO₄·7H₂O+2Na₂HPO₄·12H₂O→Fe₃(PO₄)₂·8H₂O+2Na₂SO₄+37H₂O (1).

In iron phosphate I octahydrate, as the material for synthesis, there is contained a certain amount of Fe³⁺ from the synthesis process. If Fe³⁺ is left in the material for synthesis, a trivalent Fe compound is generated by sintering to obstruct single-phase synthesis of the LiFePO₄ carbon composite material. It is therefore necessary to add a reducing agent to the starting materials for synthesis prior to sintering and to reduce Fe³⁺ contained in the starting materials for synthesis at the time of firing to Fe²⁺.

However, there is a limitation to the capability of the reducing agent in reducing Fe³⁺ to Fe²⁺ by the reducing agent, such that, if the content of Fe³⁺ in the starting materials for synthesis is excessive, it may be an occurrence that Fe³⁺ is not reduced in its entirety but is left in the LiFePO₄ carbon composite material.

It is therefore prescribed that the content of Fe³⁺ in the total iron in the iron phosphate I octahydrate be set to 61 wt% or less. By limiting the content of Fe³⁺ in the total iron in the iron phosphate I octahydrate to 61 wt% or less from the outset, single-phase synthesis of the LiFePO₄ carbon composite material can be satisfactorily achieved without allowing Fe³⁺ to be left at the time of firing, that is without generating impurities ascribable to Fe³⁺.

It should be noted that, the longer the dwell time in generating iron phosphate I octahydrate, the larger becomes the content of Fe³⁺ in the generated product, so that, by controlling the dwell time so as to be equal to a preset time, iron phosphate I octahydrate having an optional Fe³⁺ can be produced. The content of Fe³⁺ in the total iron in the iron phosphate I octahydrate can be measured by the Mesbauer method.

The carbon material added to the starting materials for synthesis acts as a reducing agent for reducing Fe³⁺ to Fe²⁺, at the time of sintering, even if Fe²⁺ contained in iron phosphate I octahydrate as the starting materials for synthesis is oxidized to Fe³⁺ by oxygen in atmosphere or due to sintering. Therefore, even if Fe³⁺ is left in the starting materials for synthesis, impurities may be prevented from being generated to assure single-phase synthesis of the LiFePO₄ carbon composite material. Moreover, the carbon material acts as an antioxidant for preventing oxidation of Fe²⁺ contained in the starting materials for synthesis to Fe³⁺. That is, the carbon material prevents oxidation to Fe³⁺ of Fe²⁺ by oxygen present in atmosphere and in a firing oven prior to or during sintering.

That is, the carbon material acts not only as an electrification agent for improving the electronic conductivity of the cathode active material but also as a reducing agent and as an antioxidant. Meanwhile, since this carbon material is a component of the LiFePO₄ carbon composite material, there is no necessity of removing the carbon material following synthesis of the LiFePO₄ carbon composite material. The result is the improved efficiency in the preparation of the LiFePO₄ carbon composite material.

It is noted that the carbon content per unit weight of the LiFePO₄ carbon composite material be not less than 3 wt%. By setting the carbon content per unit weight of the LiFePO₄ carbon composite material to not less than 3 wt%, it is possible to utilize the capacity and cyclic characteristics inherent in LiFePO₄ to its fullest extent.

In the milling process, the mixture resulting from the mixing process is subjected to milling in which pulverization and mixing occur simultaneously. By the milling herein is meant the powerful comminuting and mixing by a ball mill. As the ball mill, a planetary ball mill, a shaker ball mill or a mechano-fusion may selectively be employed.

By milling the mixture from the mixing process, the starting materials for synthesis and the carbon material can be mixed homogeneously. Moreover, if the starting materials for synthesis is comminuted by milling, the specific surface area of the starting materials for synthesis can be increased, thereby increasing the contact points of the starting materials for synthesis to accelerate the synthesis reaction in the subsequent sintering process.

It is desirable that, by milling the mixture containing the starting materials for synthesis, the particle size distribution of the particle size not less than 3 µm be not larger than 22% in terms of the volumetric integration frequency. With the particle size distribution of the starting materials for synthesis in the above range, the starting materials for synthesis has a surface area sufficient to produce surface activity for carrying out the synthesis reaction. Thus, even if the sintering temperature is of a low value of e.g., 600°C which is lower than the melting point of the starting materials for synthesis, the reaction efficiency is optimum, thus realizing the single-phase synthesis of the LiFePO₄ carbon composite material satisfactorily

Moreover, the milling is desirably executed so that the powder density of the LiFePO₄ carbon composite material will be 2.2 g/cm³ or higher. By comminuting the starting materials for synthesis to give the above defined powder density, the specific surface area of LiFePO₄ and hence the contact area between LiFePO₄ and the carbon material can be increased to improve the electronic conductivity of the cathode active material.

In the firing process, the milled mixture from the milling process is sintered. By sintering the mixture, lithium phosphate can be reacted with iron phosphate I octahydrate to synthesize LiFePO₄.

The synthesis reaction of LiFeO₄ may be represented by the following reaction formula (2):

Li₃PO₄ + Fe₃(PO₄)₂·nH₂O → 3 LiFePO₄ + nH₂O (2)

where n denotes the number of hydrates and is equal to 0 for an anhydride. In the chemical formula (2), Li₃PO₄ is reacted with Fe₃(PO₄)₂ or its hydrate Fe₃(PO₄)₂·nH₂O where n denotes the number of hydrates.

As may be seen from the chemical formula (2), no by-product is yielded if Fe₃(PO₄)₂ is used as a starting materials for synthesis. On the other hand, if Fe₃(PO₄)₂ ·nH₂O is used, water, which is non-toxic, is by-produced.

Heretofore, lithium carbonate, ammonium dihydrogen phosphate and iron acetate II, as syntheses materials, are mixed at a pre-set ratio and sintered to synthesize LiFePO₄ by the reaction shown by the chemical formula (3):

Li₂CO₃ + 2Fe(CH₃COO)₂ + 2NH₄H₂PO₄ → 2LiFePO₄ + CO₂ + H₂O + 2NH₃ + 4CH₃COOH (3).

As may be seen from the reaction formula (3), toxic by-products, such as ammonia or acetic acid, are generated on sintering with the conventional synthesis method for LiFePO₄. So, a large-scale equipment, such as gas collector, is required for processing these toxic by-products, thus raising the cost. In addition, the yield of LiFePO₄ is lowered because these by-products are generated in large quantities.

According to the present invention, in which Li₃PO₄, Fe₃(PO₄)₂ or its hydrate Fe₃(PO₄)₂·nH₂O, where n denotes the number of hydrates, is used as the starting material for synthesis, targeted LiFePO₄ can be produced without generating toxic by-products. In other words, safety in sintering may be appreciably improved as compared to the conventional manufacturing method. Moreover, while a large-scale processing equipment is heretofore required for processing toxic by-products, the manufacturing method of the present invention yields only water, which is innoxious, .. as a by-product, thus appreciably simplifying the processing step to allow to reduce size of the processing equipment. The result is that the production cost can be appreciably lower than if ammonia etc which is by-produced in the conventional system has to be processed. Moreover, since the by-product is yielded only in minor quantities, the yield of LiFePO₄ may be improved significantly.

Although the sintering temperature in sintering the mixture may be 400 to 900°C by the above synthesis method, it is preferably 600°C or thereabouts in consideration of the cell performance. If the sintering temperature is less than 400°C, neither the chemical reaction not crystallization proceeds sufficiently such that there is the risk that the phase of impurities such as Li₃O₄ of the starting materials for synthesis may persist and hence the homogeneous LiFePO₄ cannot be produced. If conversely the sintering temperature exceeds 900°C, crystallization proceeds excessively so that the LiFePO₄ particles are coarse in size to decrease the contact area between LiFePO₄ and the carbon material to render it impossible to achieve sufficient discharging capacity.

During sintering, Fe in the LiFePO₄ carbon composite material synthesized is in the bivalent state. So, in the temperature of the order of 600°C as the synthesis temperature, Fe in the LiFePO₄ carbon composite material is promptly oxidized to Fe³⁺ by oxygen in the sintering atmosphere in accordance with the chemical formula shown by the chemical formula (4):

6LiFePO₄ + 3/2O₂ → 2Li₃Fe₂(PO₄)₃ + Fe₂O₃ (4)

so that impurities such as trivalent Fe compounds are produced to obstruct the single-phase synthesis of the LiFePO₄ carbon composite material.

So, inert gases, such as nitrogen or argon, or reducing gases, such as hydrogen or carbon monoxide, are used as the sintering atmosphere, while the oxygen concentration in the sintering atmosphere is desirably a range within which Fe in the LiFePO₄ carbon composite material is not oxidized, that is to not larger than 1012 ppm in volume. By setting the oxygen concentration in the sintering atmosphere to 1012 ppm in volume or less, it is possible to prevent Fe from being oxidized even at the synthesis temperature of 600°C or thereabouts to achieve the single-phase synthesis of the LiFePO₄ carbon composite material.

If the oxygen concentration in the sintering atmosphere is 1012 ppm in volume or higher, the amount of oxygen in the sintering atmosphere is excessive, such that Fe in the LiFePO₄ carbon composite material is oxidized to Fe³⁺ to generate impurities to obstruct the single-phase synthesis of the LiFePO₄ carbon composite material.

As for takeout of the sintered LiFePO₄ carbon composite material, the takeout temperature of the sintered LiFePO₄ carbon composite material, that is th temperature of the LiFePO₄ carbon composite material when exposed to atmosphere, is desirably 305°C or lower. On the other hand, the takeout temperature of the sintered LiFePO₄ carbon composite material is more desirably 204°C or lower. By setting the takeout temperature of the LiFePO₄ carbon composite material to 305°C or lower, Fe in the sintered LiFePO₄ carbon composite material is oxidized by oxygen in atmosphere to prevent impurities from being produced.

If the sintered LiFePO₄ carbon composite material is taken out in an insufficiently cooled state, Fe in the LiFePO₄ carbon composite material is oxidized by oxygen in atmosphere, such that impurities tend to be produced. However, if the LiFePO₄ carbon composite material is cooled to too low a temperature, the operating efficiency tends to be lowered.

Thus, by setting the takeout temperature of the sintered LiFePO₄ carbon composite material to 305°C or lower, it is possible to prevent Fe in the sintered LiFePO₄ carbon composite material from being oxidized by oxygen in atmosphere and hence to prevent impurities from being generated to maintain the operation efficiency as well as to synthesize the LiFePO₄ carbon composite material having desirable characteristics as the cell with high efficiency.

Meanwhile, the cooling of the as-sintered LiFePO₄ carbon composite material is effected in a sintering furnace. The cooling method used may be spontaneous cooling or by forced cooling. However, if a shorter cooling time, that is a higher operating efficiency, is envisaged, forced cooling is desirable. In case the forced cooling is used, it is sufficient if a gas mixture of oxygen and inert gases, or only the inert gases, are supplied into the sintering furnace so that the oxygen concentration in the sintering furnace will be not higher than the aforementioned oxygen concentration, that is 1012 ppm in volume or less.

Although the carbon material is added prior to milling, it may be added after milling or after sintering.

However, if the carbon material is added after sintering, the reducing effect in sintering or the effect in prohibiting oxidation cannot be realized but the carbon material is used only for improving the electrical conductivity. Therefore, in case the carbon material is added after the sintering, it is necessary to prevent Fe³⁺ from being left by other means.

In the carbon material is added after sintering, the product synthesized by sintering is not the LiFePO₄ carbon composite material but is LiFePO₄. So, after adding the carbon material, synthesized by sintering, milling is again carried out. By again carrying out the milling, the carbon material added is comminuted and more liable to be attached to the surface of LiFePO₄. By the second milling, LiFePO₄ and the carbon material is mixed together sufficiently so that the comminuted carbon material can be homogeneously attached to the surface of LiFePO₄. Thus, even when the carbon material is added after the sintering, it is possible to obtain a product similar to one obtained in case the addition of the carbon material is effected prior to milling, that is the LiFePO₄ carbon composite material. On the other hand, the meritorious effect similar to that described above can be realized.

The non-aqueous electrolyte secondary cell 1, employing the LiFePO₄ carbon composite material, obtained as described above, as the cathode active material, may, for example, be prepared as follows:

As the anode 2, the anode active material and the binder are dispersed in a solvent to prepare a slurried anode mixture. The so-produced anode mixture is evenly coated on a current collector and dried in situ to form a layer of the anode active material to produce the anode 2. As the binder of the anode mixture, any suitable known binder may be used. In addition, any desired known additive may be added to the anode mixture. It is also possible to use metal lithium, which becomes the anode active material, directly as the anode 2.

As the cathode 4, the LiFePO₄ carbon composite material, as the cathode active material, and the binder, are dispersed in a solvent to prepare a slurried cathode mixture. The so-produced cathode mixture is evenly coated on the current collector and dried in situ to form a layer of the cathode active material to complete the cathode 4. As the binder of the cathode active material, any suitable known binder may be used, whilst any desirable known additive may be added to the cathode mixture.

The non-aqueous electrolyte may be prepared by dissolving an electrolyte salt in a non-aqueous solvent.

The anode 2 is held in the anode can 3, the cathode is held in the cathode can 5 and the separator 6 formed by a porous polypropylene film is arranged between the anode 2 and the cathode 4. The non-aqueous electrolytic solution is injected into the anode can 3 and into the cathode can 5. The anode can 3 and the cathode can 5 are caulked together and secured with the interposition of the insulating gasket 7 in-between to complete a coin-shaped non-aqueous electrolyte cell 1.

The non-aqueous electrolyte cell 1, prepared as described above, having the LiFePO₄ carbon composite material as the cathode active material, has a high charging ratio of the cathode active material and is superior in electronic conductivity. Thus, with this non-aqueous electrolyte cell 1, lithium ion doping/undoping occurs satisfactorily so that the cell may be of a larger capacity. In addition, since the superior cyclic characteristics inherent in LiFePO₄ may be manifested sufficiently, the cell may be of a larger capacity and superior in cyclic characteristics.

There is no particular limitation to the shape of the non-aqueous electrolyte cell 1 of the above-mentioned embodiment, such that the cell may be cylindrically-shaped, square-shaped, coin-shaped or button-shaped, while it may be of a thin type or of a larger format.

### EXAMPLES

The present invention is hereinafter explained based on specified experimental results. For investigating into the effects of the present invention, a LiₓFePO₄ carbon composite material was synthesized, and a non-aqueous electrolyte cell was prepared, using the so prepared LiₓFePO₄ carbon composite material as the cathode active material, to evaluate its characteristics.

### Reference example 1 (background art for understanding the invention)

### Preparation of the cathode active material

Using ferrous phosphate octahydrate Fe₃(PO₄)·8H₂O as the starting material for synthesis, a LiₓFePO₄ carbon composite material was synthesized as a cathode active material.

First, disodium hydrogen phosphate dodecahydrate (2Na₂HPO₄·12H₂O) was added to an aqueous solution prepared on dissolving iron sulfate heptahydrate (FeSO₄·7H₂O) in water and allowed to stand for 0.5 hour to prepare ferrous phosphate octahydrate.

The content ratio of Fe³⁺ with respect to total iron in the so prepared ferrous phosphate octahydrate was measured in accordance with the Messbauer method. The Fe³⁺ content ratio, thus measured, was found to be zero.

The ferrous phosphate octahydrate, thus produced, and lithium phosphate Fe₃PO₄, were mixed together to give a lithium to iron element ratio of 1:1, and acetylene black powders as amorphous carbon material was added in an amount of 10 wt% of the entire sintered product to give a mixture. The mixture and alumina balls each 10 mm in diameter were charged into an alumina pot 100 mm in diameter, in a mass ratio of the mixture : alumina balls equal to 1:2. The resulting mixture was milled using a planetary ball mill. Meanwhile, a planetary rotational pot mill for test "LA-PO₄" manufactured by ITO SEISAKUSHO KK to carry out milling under the following conditions:
radius of rotation about sun gear: 200 mm
number of revolutions about the sun gear: 250 rpm
number of revolutions about a planetary gear itself: 250 rpm
driving time duration: 10 hours.

The milled mixture was charged into a ceramic crucible and sintered for five hours at a temperature of 600°C in an electrical furnace maintained in a nitrogen atmosphere to produce an LiFePO₄ carbon composite material.

### Preparation of liquid-based test cell

A cell was prepared using the so prepared LiFePO₄ carbon composite material, as a cathode active material.

First, 95 parts by weight of the LiₓFePO₄ carbon composite material, as the cathode active material, prepared as described above, and 5 parts by weight of poly(vinylidene fluoride), which are fluorine resin powders, as a binder, were mixed together, and pressure-molded to give a pellet-shaped cathode with a diameter of 15.5 mm and a thickness of 0.1 mm.

A foil of metal lithium was then punched to substantially the same shape as the cathode to form an anode.

Then, a non-aqueous electrolyte solution was prepared by dissolving LIPF₆ in a solvent mixture comprised of equal volumes of propylene carbonate and dimethyl carbonate, at a concentration of 1 mol/l, to prepare a non-aqueous electrolyte solution.

The cathode, thus prepared, was charged into the cathode can, while the anode was held in the anode can and the separator was arranged between the cathode and the anode. The non-aqueous electrolytic solution is injected into the anode can and into the cathode can. The anode can and the cathode can were caulked and secured together to complete a type 2016 coin-shaped test cell.

### Examples 2 to 8 and Comparative Examples 1 and 2

A coin-shaped test cell was prepared in the same way as in Example 1, except that, in synthesizing the ferrous phosphate octahydrate, the time during which the aqueous solution obtained on dissolving iron sulfate heptahydrate (FeSO4·7H2O) in water and subsequently adding disodium hydrogen phosphate dodecahydrate (2Na2HPO₄·12H₂O) is allowed to stand is suitably adjusted to control the content ratio of Fe³⁺ with respect to the total iron in the ferrous phosphate octahydrate. Meanwhile, the content ratio of Fe³⁺ is measured in accordance with the Messbauer method. The above-mentioned time of allowing to stand and the content ratio of Fe³⁺ with respect to the total iron in the ferrous phosphate octahydrate are as stated in the Table 1 shown below.

The coin-shaped test cells of the Examples 1 to 8 and the Comparative Examples 1 and 2, prepared as described above, the charging/discharging cyclic characteristic tests were conducted as now explained to find the discharging capacity after 50 cycles and the capacity upkeep ratio after 50 cycles.

### Test of charging/discharging cyclic characteristics

The charging/discharging cyclic characteristics were evaluated based on the volume upkeep ratio after repeated charging/discharging.

Each test cell was charged at a constant current and, at a time point the cell voltage reached 4.2 V, the constant current charging was switched to constant voltage charging and charging was carried out as the cell voltage was kept at 4.2 V. The charging was terminated at a time point the current value fell to 0.01 mA/cm² or less. Each test was then discharged. The discharging was terminated at a time point the cell voltage fell to 2.0 V.

With the above process as one cycle, 50 cycles were carried out, and the discharging capacity at the first cycle and that at the fiftieth cycle were found. The ratio of the discharging capacity at the fiftieth cycle (C2) to the discharging capacity at the first cycle (C1) (C2/C1) × 100 was found as the capacity upkeep ratio. Meanwhile, both the charging and the discharging were carried out at ambient temperature (25°C), as the current density at this time was set to 0.1 mA/cm².

The above results are shown in Table 1 along with the content ratio of Fe³⁺ in the total iron in the ferrous phosphate octahydrate. Meanwhile, by way of cell evaluation in Table 1, the cell with the discharging capacity of the 50th cycle of 50% or higher is marked O, while that less than 50% is marked x. It should be noted that 50% represents the capacity upkeep ratio desirable as cell characteristics.

**Table 1**

| | content ratio of Fe³⁺ (%) | capacity after 50 cycles (mAh/g) | upkeep ratio (%) | cell evaluation | time of allowing to stand (hr) |
|---|---|---|---|---|---|
| Ref. Ex.1 | 0 | 153 | 95.0 | ○ | 0.5 |
| Ex.2 | 2 | 151 | 94.4 | ○ | 1 |
| Ex.3 | 7 | 151 | 93.8 | ○ | 6 |
| Ex.4 | 13 | 153 | 95.0 | ○ | 24 |
| Ex.5 | 21 | 151 | 94.3 | ○ | 48 |
| Ex.6 | 41 | 146 | 93.0 | ○ | 72 |
| Ex.7 | 55 | 137 | 89.0 | ○ | 96 |
| Ex.8 | 61 | 90 | 72.0 | ○ | 120 |
| Comp. Ex. 1 | 65 | 32 | 31.1 | × | 144 |
| Comp. Ex. 2 | 70 | 32 | 58.2 | × | 168 |

As may be seen from Table 1, in the Examples 1 to 8 with the content of Fe³⁺ with respect to total iron in the ferrous phosphate octahydrate of 0 to 61 wt%, the values of the capacity upkeep ratio are much higher than 50 % for the 50th cycle, desirable as characteristics of the practically useful cell, while the discharge capacity of the 50th cycle also exhibit desirable values.

Conversely, with the Comparative Examples 1 and 2, with the content of Fe³⁺ with respect to total iron in the ferrous phosphate octahydrate of 65 wt% and 70 wt%, the values of the capacity upkeep ratio are much lower than 50 % for the 50th cycle, desirable as characteristics of the practically useful cell, while the discharge capacity of the 50th cycle also exhibit extremely low values. This is possibly ascribable to the fact that the content ratio of Fe³⁺ with respect to the total iron in ferrous phosphate octahydrate as a starting material for synthesis of an LiFePO₄ carbon composite material is excessively high such that Fe³⁺ is left over as an impurity to interfere with optimum single-phase synthesis of the LiFePO₄ carbon composite material.

Thus, it may be said that, by setting the content ratio of Fe³⁺ with respect to the total iron in ferrous phosphate octahydrate as a starting material for synthesis of an LiFePO₄ carbon composite material to 61 wt% or less, single-phase synthesis of the LiFePO₄ carbon composite material can be carried out reliably without allowing Fe³⁺ to be left over as an impurity.

### Preparation of polymer cell

Next, a polymer cell was prepared to evaluate its characteristics.

### Example 9

First, a gel electrolyte was fabricated as follows: First, polyvinylidene fluoride, copolymerized with 6.9 wt% of hexafluoropropylene, a non-aqueous electrolyte solution and dimethyl carbonate, were mixed together, agitated and dissolved to form a sol-like electrolyte solution. To this sol-like electrolyte solution was added 0.5 wt% of vinylene carbonate (VC) in a proportion of 0.5 wt% to fonn a gel-like electrolyte solution. As the non-aqueous electrolyte solution, such a solution was used which was obtained on mixing ethylene carbonate (EC) and propylene carbonate (PC) at a volumetric ratio of 6:4 to give a solvent mixture in which LiPF6 was dissolved at a ratio of 0.85 mol/kg.

A cathode then was prepared as follows: First, 95 parts by weight of LiFePO₄ carbon composite material, prepared in Reference Example 1, and 5 parts by weight of poly(vinylidene fluoride), which is fluorine resin powders, as a binder, were mixed together, and added to with N-methyl pyrrolidone to form a slurry. This slurry was coated on an aluminum foil 20 µm in thickness, dried under heating and pressed to form an anode coating foil. A solution of a gelated electrolyte was then coated on one surface of the anode coating film and the resulting mass was dried to remove the solvent. The resulting product was punched to a circle 15 mm in diameter, depending on the cell diameter, to form a cathode electrode.

An anode then was prepared as follows: First, 10 wt% of fluorine resin powders as a binder were mixed to graphite powders and N-methyl pyrrolidone was added to the resulting mass to form a slurry. This slurry was coated on a copper foil and dried under heating. The resulting product was pressed to form an anode coating foil. A gelated electrolyte solution was then coated on one surface of this anode coating foil and dried to remove the solvent. The resulting product was punched to a circle with a diameter of 16.5 mm, depending on the cell size, to form an anode.

The cathode and the anode, thus prepared, were accommodated in a cathode can and an anode can, respectively, and a separator was arranged between the cathode and the anode. The cathode can and the anode can were caulked and secured to each other to form a type 2016 coin-shaped lithium polymer cell having a diameter and a thickness of 20 mm and 1.6 mm, respectively.

The polymer cell of the Example 9, prepared as described above, was put to the test on the charging/discharging cyclic characteristics to find the initial discharge capacity and the capacity upkeep ratio after 30 cycles. The results are shown in Table 2.

**Table 2**

| | initial discharging capacity (mAh/g) | capacity upkeep ratio after 30 cycles (%) |
|---|---|---|
| Ex.9 | 158 | 95.8% |

As may be seen from Table 2, the initial discharging capacity and the capacity upkeep ratio after 30 cycles both exhibit satisfactory values. It may be confirmed from this that the cathode active material prepared by the manufacturing method of the present invention gives rise to favorable results of improved discharging capacity and improved cyclic characteristics even in cases wherein a gelated electrolyte is used in place of the non-aqueous electrolyte solution as the non-aqueous electrolyte.

## Claims

1. A method for the preparation of a cathode active material comprising a mixing step of mixing starting materials for synthesis of a compound having the formula LiₓFePO₄, where 0< x ≤ 1,
a milling step of simultaneously pulverizing and mixing a mixture resulting from said mixing step; and
a sintering step of firing the mixture resulting from said milling step; wherein a carbon material is added at any one of the above steps;
Li₃PO₄ and Fe₃(PO₄)₂ or a hydrate thereof Fe₃(PO₄)₂·nH₂O, where n denotes the number of hydrates, are used as said starting materials for synthesis; and wherein
the content of Fe³⁺ in the total iron in said Fe₃(PO₄)₂ or a hydrate thereof Fe₃(PO₄)₂·nH₂O, where n denotes the number of hydrates, is set to 2 to 61 wt%.

2. The method for the preparation of a cathode active material according to claim 1 wherein the carbon content per unit volume of a LiₓFePO4 carbon composite material composed of said LiₓFePO₄, where 0<x1, and said carbon material, is not less than 3 wt%.

3. The method for the preparation of a cathode active material according to claim 2 wherein, in the carbon material forming said LiₓFePO₄ carbon composite material, the strength area ratio A (D/G) of diffraction rays appearing at the number of waves of 1570 to 1590 cm⁻¹ with respect to diffraction lines appearing at the number of waves of the Raman spectrum of graphite in the Raman spectrographic method is not less than 0.3.

4. The method for the preparation of a cathode active material according to claim 2 wherein the powder density of said LiₓFePO₄ carbon composite material is not less than 2.2 cm³/g.

5. The method for the preparation of a cathode active material according to claim 2 wherein the Brunauer Emmet Teller specific surface area of said LiₓFePO₄ carbon composite material s not less than 10.3 m²/g.

6. The method for the preparation of a cathode active material according to claim 2 wherein the first-order particle of said LiₓFePO₄ carbon composite material is not larger than 3.1 µm.

7. A method for the preparation of a non-aqueous electrolyte cell having a cathode having a cathode active material, an anode having an anode active material and a non-aqueous electrolyte, said method comprising a mixing step of mixing starting materials for synthesis of a compound having the formula LiₓFePO₄, where 0 < x ≤ 1,
a milling step of simultaneously pulverizing and mixing a mixture resulting from said mixing step; and
a sintering step of firing the mixture resulting from said milling step; wherein a carbon material is added at any one of the above steps;
Li₃PO₄ and Fe₃(PO₄)₂ or a hydrate thereof Fe₃(PO₄)₂·nH₂O, where n denotes the number of hydrates, are used as said starting materials for synthesis; and wherein
the content of Fe³⁺ in the total iron in said Fe₃(PO₄)₂ or a hydrate thereof Fe₃(PO₄)₂·nH2O, where n denotes the number of hydrates, is set to 2 to 61 wt%.

8. The method for the preparation of a non-aqueous electrolyte cell according to claim 7 wherein the carbon content per unit volume of a LiₓFePO₄ carbon composite material composed of said LiₓFePO₄, where 0<x≤1, and said carbon material, is not less than 3 wt%.

9. The method for the preparation of a non-aqueous electrolyte cell according to claim 8 wherein, in the carbon material forming said LiₓFePO₄ carbon composite material, the strength area ratio A (D/G) of diffraction rays appearing at the number of waves of 1570 to 1590 cm⁻¹ with respect to diffraction lines appearing at the number of waves of 1340 to 1360 cm⁻¹ of the Raman spectrum of graphite in the Raman spectrographic method is not less than 0.3.

10. The method for the preparation of a non-aqueous electrolyte cell according to claim 8 wherein the powder density of said LiₓFePO₄ carbon composite material is not less than 2.2 cm³/g.

11. The method for the preparation of a non-aqueous electrolyte cell according to claim 8 wherein the Brunauer Emmet Teller specific surface area of said LiₓFePO₄ carbon composite material is not less than 10.3 m²/g.

12. The method for the preparation of a non-aqueous electrolyte cell according to claim 8 wherein the first-order particle of said LiₓFePO₄ carbon composite material is not larger than 3.1 µm.

13. The method for the preparation of a non-aqueous electrolyte cell according to claim 8 wherein said non-aqueous electrolyte is a liquid-based electrolyte employing a non-aqueous electrolyte solution composed of an electrolyte dissolved in a non-aqueous solvent.

14. The method for the preparation of a non-aqueous electrolyte cell according to claim 8 wherein said non-aqueous electrolyte is a solid electrolyte.

15. The method for the preparation of a non-aqueous electrolyte cell according to claim 14 wherein said solid electrolyte is composed of an electrolyte salt and a high molecular compound dissolving said electrolyte salt and wherein said high molecular compound is a gelated electrolyte matrix gelated on absorbing said non-aqueous electrolyte solution.

## Patentansprüche

1. Verfahren zur Herstellung eines aktiven Materials für eine Kathode, umfassend einen Mischschritt zum Mischen von Ausgangsmaterialien zur Synthese einer Verbindung mit der Formel LiₓFePO₄, wobei 0<x≤ list,
ein Mahlschritt bei dem gleichzeitig eine Mischung, die aus dem Mischschritt resultiert, pulverisiert und gemischt wird; und
ein Sinterschritt zum Brennen der Mischung, die aus dem Mahlschritt resultiert, wobei
ein Kohlenstoffmaterial während irgendeinem der vorstehenden Schritte zugegeben wird;
Li₃PO₄ und Fe₃(PO₄)₂ oder ein Hydrat davon Fe₃(PO₄)₂·nH₂O, wobei n die Anzahl der Hydrate bezeichnet, als Ausgangsmaterialien zur Synthese verwendet werden; und wobei
der Gehalt von Fe³⁺ im Gesamteisen von Fe₃(PO₄)₂ oder Hydrat davon Fe₃(PO₄)₂·nH₂O, wobei n die Anzahl der Hydrate bezeichnet, auf 2 bis 61 Gew.-% eingestellt wird.

2. Verfahren zur Herstellung eines aktiven Kathodenmaterials nach Anspruch 1, wobei der Kohlenstoffgehalt pro Volumeneinheit LiₓFePO₄-Kohlenstoff-Kompositmaterials, das aus dem LiₓFePO₄, wobei 0<x ≤ 1 ist, und dem Kohlenstoffmaterial aufgebaut ist, nicht weniger als 3 Gew.-% beträgt.

3. Verfahren zur Herstellung eines aktiven Materials für eine Kathode nach Anspruch 2, wobei im Kohlenstoffmaterial, das das LiₓFePO₄-Kohlenstoff-Kompositmaterial ausbildet, das Stärkeflächenverhältnis A(D/G) von Diffraktionsstrahlen, die bei den Wellenzahlen von 1570 bis 1590 cm⁻¹ auftreten, hinsichtlich der Diffraktionslinien, die bei den Wellenzahlen im Raman-Spektrum von Graphit bei dem Raman-Spektroskopieverfahren auftritt, nicht geringer als 0,3 ist.

4. Verfahren zur Herstellung eines aktiven Kathodenmaterials nach Anspruch 2, wobei die Schüttdichte des LiₓFePO₄-Kohlenstoff-Kompositmaterials nicht weniger als 2,2 cm³/g beträgt.

5. Verfahren zur Herstellung eines aktiven Kathodenmaterials nach Anspruch 2, wobei die spezifische Oberfläche nach Brunauer-Emmet-Teller des LiₓFePO₄-Kohlenstoff-Kompositmaterials nicht weniger als 10,3 m²/g beträgt.

6. Verfahren zur Herstellung eines aktiven Kathodenmaterials nach Anspruch 2, wobei die Teilchen erster Ordnung des LiₓFePO₄-Kohlenstoff-Kompositmaterials nicht größer als 3,1 µm sind.

7. Verfahren zur Herstellung einer nichtwässrigen Elektrolytzelle mit einer Kathode mit einem aktiven Kathodenmaterial, einer Anode mit einem aktiven Anodenmaterial und einem nichtwässrigen Elektrolyt, wobei das Verfahren umfasst einen Mischschritt zum Mischen von Ausgangsmaterialien zur Synthese einer Verbindung mit der Formel LiₓFePO₄, wobei 0<x ≤ 1 ist,
ein Mahlschritt bei dem gleichzeitig eine Mischung, die aus dem Mischschritt resultiert, pulverisiert und gemischt wird; und
ein Sinterschritt zum Brennen der Mischung, die aus dem Mahlschritt resultiert, wobei
ein Kohlenstoffmaterial während irgendeinem der vorstehenden Schritte zugegeben wird;
Li₃PO₄ und Fe₃(PO₄)₂ oder ein Hydrat davon Fe₃(PO₄)₂·nH₂O, wobei n die Anzahl der Hydrate bezeichnet, als Ausgangsmaterialien zur Synthese verwendet werden; und wobei
der Gehalt von Fe³+ im Gesamteisen von Fe₃(PO₄)₂ oder Hydrat davon Fe₃(PO₄)₂·nH₂O, wobei n die Anzahl der Hydrate bezeichnet, auf 2 bis 61 Gew.-% eingestellt wird.

8. Verfahren zur Herstellung einer nichtwässrigen Elektrolytzelle nach Anspruch 7, wobei der Kohlenstoffgehalt pro Volumeneinheit des LiₓFePO₄-Kohlenstoff-Kompositmaterials, das aus dem LiₓFePO₄, wobei 0 < x ≤ 1 ist, und dem Kohlenstoffmaterial aufgebaut ist, nicht weniger als 3 Gew.-% beträgt.

9. Verfahren zur Herstellung einer nichtwässrigen Elektrolytzelle nach Anspruch 8, wobei im Kohlenstoffmaterial, das das LiₓFePO₄-Kohlenstoff-Kompositmaterial ausbildet, das Stärkeflächenverhältnis A(D/G) von Diffraktionsstrahlen, die bei den Wellenzahlen von 1570 bis 1590 cm⁻¹ auftreten, hinsichtlich der Diffraktionslinien, die bei den Wellenzahlen im Raman-Spektrum von Graphit bei dem Raman-Spektroskopieverfahren auftritt, nicht geringer als 0,3 ist.

10. Verfahren zur Herstellung einer nichtwässrigen Elektrolytzelle nach Anspruch 8, wobei die Schüttdichte des LiₓFePO₄-Kohlenstoff-Kompositmaterials nicht weniger als 2,2 cm³/g beträgt.

11. Verfahren zur Herstellung einer nichtwässrigen Elektrolytzelle nach Anspruch 8, wobei die spezifische Oberfläche nach Brunauer-Emmet-Teller des LiFePO₄-Kohlenstoff-Kompositmaterials nicht weniger als 10,3 m²/g beträgt.

12. Verfahren zur Herstellung einer nichtwässrigen Elektrolytzelle nach Anspruch 8, wobei die Teilchen erster Ordnung des LiₓFePO₄-Kohlenstoff-Kompositmaterials nicht größer als 3,1 µm sind.

13. Verfahren zur Herstellung einer nichtwässrigen Elektrolytzelle nach Anspruch 8, wobei der nichtwässrige Elektrolyt ein auf einer Flüssigkeit basierender Elektrolyt ist, der eine nichtwässrige Elektrolytlösung verwendet, die aus einem Elektrolyt aufgebaut ist, der in einem nichtwässrigen Lösungsmittel gelöst ist.

14. Verfahren zur Herstellung einer nichtwässrigen Elektrolytzelle nach Anspruch 8, wobei der nichtwässrige Elektrolyt ein fester Elektrolyt ist.

15. Verfahren zur Herstellung einer nichtwässrigen Elektrolytzelle nach Anspruch 14, wobei der nichtwässrige Elektrolyt aus einem Elektrolytsalz und einer hochmolekularen Verbindung aufgebaut ist, die das Elektrolytsalz löst, und wobei die hochmolekulare Verbindung eine gelierte Elektrolytmatrix ist, die zum Absorbieren der nichtwässrigen Elektrolytlösung geliert ist.

## Revendications

1. Procédé pour la préparation d'un matériau actif cathodique comprenant une étape de mélange consistant à mélanger des matériaux de départ pour la synthèse d'un composé ayant la formule LiₓFePO₄, où 0 < x ≤ 1,
une étape de broyage consistant à pulvériser et mélanger simultanément un mélange résultant de ladite étape de mélange ; et
une étape de frittage consistant à cuire le mélange résultant de ladite étape de broyage ; dans lequel
un matériau carboné est ajouté lors de l'une quelconque des étapes précitées ;
Li₃PO4 et Fe₃(PO₄)₂ ou leur hydrate Fe₃(PO₄)₂·nH₂O, où n représente le nombre d'hydrates, sont utilisés en qualité desdits matériaux de base pour la synthèse ; et dans lequel
la teneur en Fe³⁺ dans le fer total dudit Fe₃(PO₄)₂ ou de son hydrate Fe₃(PO₄)₂·nH₂O, où n représente le nombre d'hydrates, est fixée de 2 à 61 % en poids.

2. Procédé pour la préparation d'un matériau actif cathodique selon la revendication 1, dans lequel la teneur en carbone par unité de volume d'un matériau composite carboné LiₓFePO₄ composé dudit LiₓFePO₄, où 0 < x ≤ 1, et dudit matériau carboné, n'est pas inférieure à 3 % en poids.

3. Procédé pour la préparation d'un matériau actif cathodique selon la revendication 2, dans lequel, dans le matériau carboné formant ledit matériau composite carboné LiₓFePO₄, le rapport résistance/surface A (D/G) entre les rayons de diffraction apparaissant au nombre d'ondes de 1570 à 1590 cm⁻¹ et les lignes de diffraction apparaissant au nombre d'ondes du spectre du graphite de Raman dans le procédé spectrographique de Raman n'est pas inférieur à 0,3.

4. Procédé pour la préparation d'un matériau actif cathodique selon la revendication 2, dans lequel la masse volumique de poudre dudit matériau composite carboné LiₓFePO₄ n'est pas inférieure à 2,2 cm³/g.

5. Procédé pour la préparation d'un matériau actif cathodique selon la revendication 2, dans lequel la surface spécifique de Brunauer Emmet Teller dudit matériau composite carboné LiₓFePO₄ n'est pas inférieure à 10,3 m²/g.

6. Procédé pour la préparation d'un matériau actif cathodique selon la revendication 2, dans lequel la taille de particule de premier ordre dudit matériau composite carboné LixFeP04 n'est pas supérieure à 3,1 µm.

7. Procédé pour la préparation d'une pile à électrolyte non aqueux ayant une cathode comportant un matériau actif cathodique, une anode comportant un matériau actif anodique et un électrolyte non aqueux, ledit procédé comprenant une étape de mélange consistant à mélanger des matériaux de départ pour la synthèse d'un composé ayant la formule LiₓFePO₄, où 0 < x ≤ 1,
une étape de broyage consistant à pulvériser et mélanger simultanément un mélange résultant de ladite étape de mélange ; et
une étape de frittage consistant à cuire le mélange résultant de ladite étape de broyage ; dans lequel
un matériau carboné est ajouté lors de l'une quelconque des étapes précitées ;
Li₃PO4 et Fe₃(PO₄)₂ ou leur hydrate Fe₃(PO₄)₂·nH₂O, où n représente le nombre d'hydrates, sont utilisés en qualité desdits matériaux de base pour la synthèse ; et dans lequel
la teneur en Fe³⁺ dans le fer total dudit Fe₃(PO₄)₂ ou de son hydrate Fe₃(PO₄)₂·nH₂O, où n représente le nombre d'hydrates, est fixée de 2 à 61 % en poids.

8. Procédé pour la préparation d'une pile à électrolyte non aqueux selon la revendication 7, dans lequel la teneur en carbone par unité de volume d'un matériau composite carboné LiₓFePO₄ composé dudit LiₓFePO₄, où 0 < x ≤ 1, et dudit matériau carboné, n'est pas inférieure à 3 % en poids.

9. Procédé pour la préparation d'une pile à électrolyte non aqueux selon la revendication 8, dans lequel, dans le matériau carboné formant ledit matériau composite carboné LiₓFePO₄, le rapport résistance/surface A (D/G) entre les rayons de diffraction apparaissant au nombre d'ondes de 1570 à 1590 cm⁻¹ et les lignes de diffraction apparaissant au nombre d'ondes de 1340 à 1360 cm⁻¹ du spectre du graphite de Raman dans le procédé spectrographique de Raman n'est pas inférieur à 0,3.

10. Procédé pour la préparation d'une pile à électrolyte non aqueux selon la revendication 8, dans lequel la masse volumique de poudre dudit matériau composite carboné LiₓFePO₄ n'est pas inférieure à 2,2 cm³/g.

11. Procédé pour la préparation d'une pile à électrolyte non aqueux selon la revendication 8, dans lequel la surface spécifique de Brunauer Emmet Teller dudit matériau composite carboné LiₓFePO₄ n'est pas inférieure à 10,3 m²/g.

12. Procédé pour la préparation d'une pile à électrolyte non aqueux selon la revendication 8, dans lequel la taille de particule de premier ordre dudit matériau composite carboné LiₓFePO₄ n'est pas supérieure à 3,1 µm.

13. Procédé pour la préparation d'une pile à électrolyte non aqueux selon la revendication 8, dans lequel ledit électrolyte non aqueux est un électrolyte à base liquide utilisant une solution électrolytique non aqueuse composée d'un électrolyte dissous dans un solvant non aqueux.

14. Procédé pour la préparation d'une pile à électrolyte non aqueux selon la revendication 8, dans lequel ledit électrolyte non aqueux est un électrolyte solide.

15. Procédé pour la préparation d'une pile à électrolyte non aqueux selon la revendication 14, dans lequel ledit électrolyte solide est composé d'un sel d'électrolyte et d'un composé de masse moléculaire élevée qui dissout ledit sel d'électrolyte et dans lequel ledit composé de masse moléculaire élevée est une matrice électrolytique gélifiée, qui se gélifie lors de l'absorption de ladite solution électrolytique non aqueuse.
